(19) Europäisches Patentamt / European Patent Office / Office européen des brevets

(11) **EP 3 060 940 B1**

(12) **EUROPEAN PATENT SPECIFICATION**

(45) Date of publication and mention
of the grant of the patent:
**25.08.2021 Bulletin 2021/34**

(21) Application number: **14855968.5**

(22) Date of filing: **29.09.2014**

(51) Int Cl.:
*G01S 7/03* (2006.01)   *H01Q 21/08* (2006.01)
*G01S 13/42* (2006.01)   *G01S 13/34* (2006.01)
*G01S 7/35* (2006.01)   *H01Q 3/26* (2006.01)
*H01Q 3/24* (2006.01)   *G01S 13/931* (2020.01)
*H01Q 1/32* (2006.01)

(86) International application number:
**PCT/US2014/058018**

(87) International publication number:
**WO 2015/060997 (30.04.2015 Gazette 2015/17)**

(54) **ANGLE RESOLUTION IN RADAR**

WINKELAUFLÖSUNG IN EINEM RADAR

RÉSOLUTION D'ANGLE DANS UN RADAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2013 IN 4825CH2013**
**11.07.2014 US 201414329446**

(43) Date of publication of application:
**31.08.2016 Bulletin 2016/35**

(73) Proprietor: **Texas Instruments Incorporated Dallas, TX 75265-5474 (US)**

(72) Inventors:
• **RAO, Sandeep**
**Bangalore 560093 (IN)**
• **KHANNA, Saurabh**
**Delhi 110092 (IN)**

(74) Representative: **Zeller, Andreas et al**
**Texas Instruments Deutschland GmbH**
**Haggertystraße 1**
**85356 Freising (DE)**

(56) References cited:
EP-A2- 2 113 788      WO-A1-2007/029519
US-A1- 2006 022 866   US-A1- 2007 285 315
US-A1- 2008 291 088   US-A1- 2009 315 761
US-A1- 2010 141 527   US-B2- 7 570 197
US-B2- 8 049 657

**Description**

This relates in general to radar, and in particular to angle resolution in radar.

BACKGROUND

A vehicle may have parking sensors to detect an obstacle behind the vehicle. The parking sensors determine a distance of the vehicle from the obstacle using ultrasonic signals when backing the vehicle. Such a parking sensor operates at ultrasonic frequencies. The parking sensor outputs an ultrasonic detecting signal to detect whether any obstacle is behind the rear of the vehicle, and receives an ultrasonic signal in reply from the obstacle. In one example, the vehicle has multiple parking sensors to cover the entire rear of the vehicle, which makes it relatively expensive. Also, the ultrasonic parking sensors use a time division obstacle detecting technique, in which each sensor sends and receives an ultrasonic detect signal in a defined time slot. Accordingly, the process of detecting obstacles using ultrasonic sensors is time consuming, which is unsafe in vehicles moving with high velocity.

For ultrasonic parking sensors, holes are measured and drilled in the vehicle's bumper to install transducers. Risks are associated with drilling and mounting the transducers into the bumper. The performance of the ultrasonic sensors is sensitive to temperature and atmospheric conditions, such as snow and rain. The performance of ultrasonic sensors is severely degraded when the sensors are covered with snow. Also, the ultrasonic sensors have a limited range of operation.

The use of radars in automotive applications is evolving rapidly. Radars do not have the same drawbacks as ultrasonic sensors. Radar is useful in a number of vehicle applications, such as collision warning, blind spot warning, lane change assist, parking assist and rear collision warning. Examples include pulse radar and FMCW (frequency modulation continuous wave) radar.

In pulse radar, the radar transmits a signal in the shape of a pulse at fixed intervals. The obstacle scatters the transmitted pulse, and the scattered pulse is received by the radar. The time between transmission of the pulse and receiving the scattered pulse is proportional to a distance of the obstacle from the radar. For better range resolution, a narrower pulse is used with a high sampling rate in an ADC (analog to digital converter) for the pulse radar. Also, sensitivity of a pulse radar is directly proportional to the power, which complicates design of the pulse radar.

In FMCW radar, a transmit signal is frequency modulated to generate a transmit chirp. The obstacle scatters the transmit chirp, and the scattered chirp is received by the FMCW radar. A beat signal is obtained by mixing the transmitted chirp and the received scattered chirp. The frequency of the beat signal is proportional to the distance of the obstacle from the FMCW radar. The beat signal is sampled by an analog to digital converter (ADC). A sampling rate of the ADC is proportional to the maximum frequency of the beat signal, and the frequency of the beat signal is proportional to the range of the farthest obstacle, which can be detected by the FMCW radar. Accordingly, in the pulse radar, the sampling rate of the ADC in the FMCW radar is independent of the range resolution.

Often, in an FMCW radar, multiple chirps are transmitted in a frame unit. A2-dimensional (2D) FFT is performed on the sampled beat signal data received over a frame for range and relative velocity estimation of the obstacle. A bin is a 2D FFT grid that corresponds to a range and relative velocity estimate of an obstacle. A signal detected in a specific bin represents the presence of an obstacle with a predefined range and relative velocity. When multiple receive antennas are used for receiving the scattered chirp, the FMCW radar estimates an elevation angle of the obstacle and an azimuth angle of the obstacle. In each frame, a 2D FFT is computed using the data received from each receive antenna. Accordingly, the number of 2D FFTs is equal to the number of the receive antennas. When an obstacle is detected in a specific bin of the 2D FFT grid, the value of the specific bin corresponding to each of the receive antennas is used for estimating the azimuth angle and the elevation angle of the obstacle.

The FMCW radar resolves obstacles in the dimensions of range, relative velocity and angle. To accurately estimate position of the obstacle, the obstacle is resolved in any one of these dimensions. If multiple obstacles are located at the same distance from the FMCW radar, and if they travel with same relative velocity, the FMCW radar resolves these obstacles in angle dimension.

Accordingly, angle estimation is an important factor in determining performance of the FMCW radar. The resolution and accuracy of the angle estimation is directly proportional to the number of antenna units in the FMCW radar. As FMCW radars are used in a broad range of applications, their design becomes more cost-sensitive. Each antenna has a distinct receiver path (which includes amplifiers, mixers, ADCs and filters) for receiving the scattered chirp, so the number of antennas used in the FMCW radar is a key factor in determining overall cost of the FMCW radar.

US 2007/0285315 relates to phase arrays exploiting geometry phase and methods of creating such arrays. US 2008/0291088 relates to a radar apparatus. EP 2113788 relates to a mobile radar and planar antenna. US 2006/0022866 relates to a vehicle obstacle warning radar.

SUMMARY

The invention is defined by independent claims 1 and 6. Embodiments are described by the dependent claims.

BRIEF DESCRIPTION OF THE DRAWINGS

FIG. 1 illustrates a receive antenna unit in a radar apparatus.
FIG. 2(a) illustrates a radar apparatus.
FIG. 2(b) illustrates operation of a radar apparatus.
FIG. 2(c)-1 illustrates beam-width of a transmit antenna unit in a radar apparatus, in which transmit antennas Tx1 and Tx2 transmit at the same time.

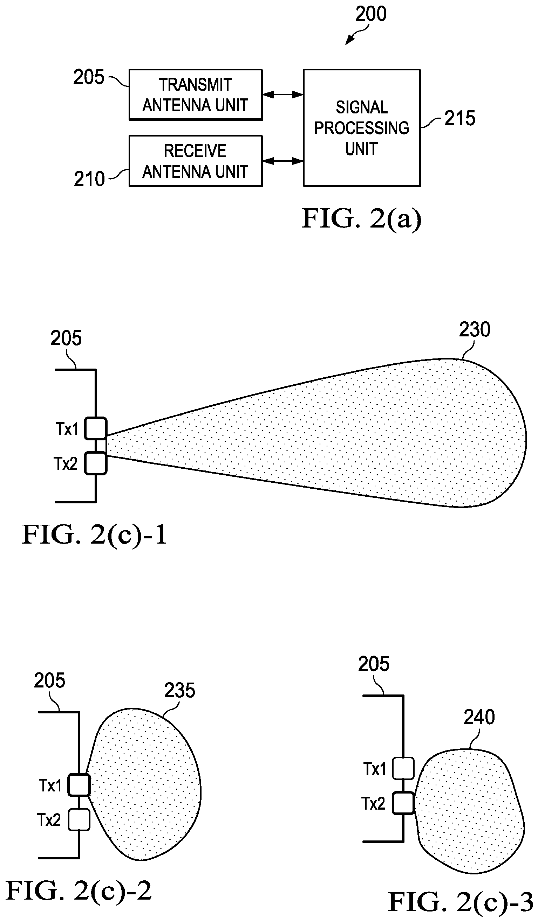

FIG. 2(c)-2 illustrates beam-width of a transmit antenna unit in a radar apparatus, in which transmit antenna Tx1 is transmitting, and transmit antenna Tx2 is not transmitting.
FIG. 2(c)-3 illustrates beam-width of a transmit antenna unit in a radar apparatus, in which transmit antenna Tx2 is transmitting, and transmit antenna Tx1 is not transmitting.

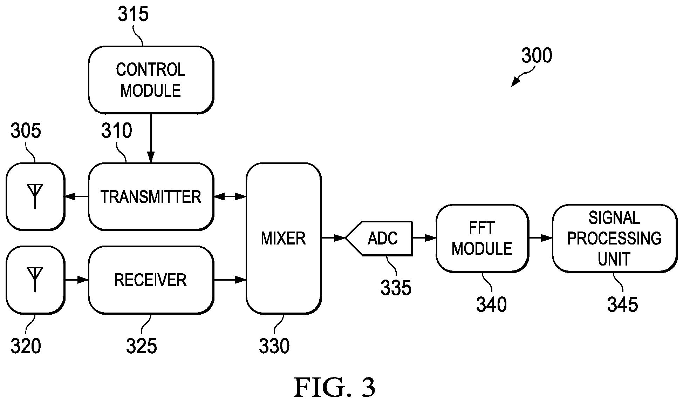

FIG. 3 illustrates a radar apparatus.

DETAILED DESCRIPTION OF EXAMPLE EMBODIMENTS

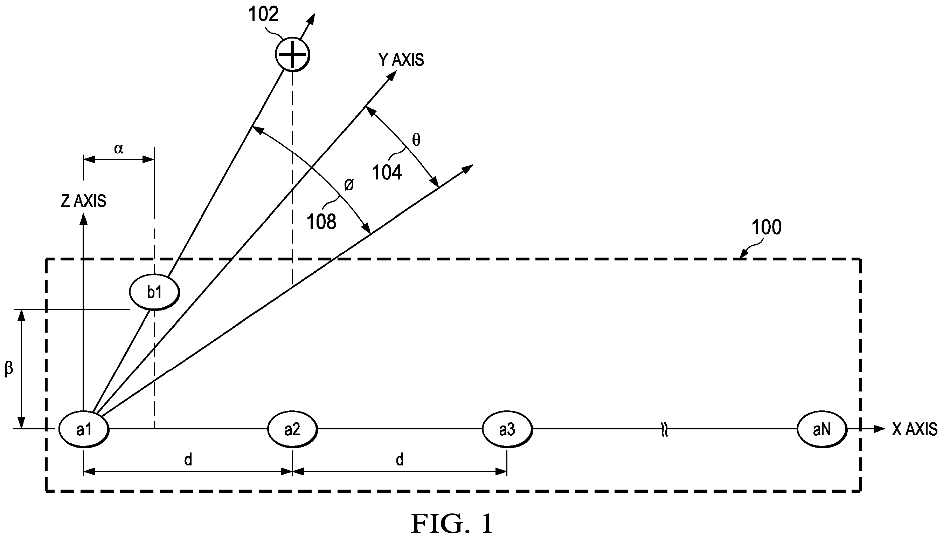

FIG. 1 shows a receive antenna unit 100 in a radar apparatus. In at least one example, the receive antenna unit 100 is integrated in a radar apparatus, which is further integrated in an industrial or automotive application. The receive antenna unit 100 includes a linear array of antennas. The linear array of antennas includes multiple antennas, such as antennas a1, a2, a3 and aN, where aN is the $N^{th}$ antenna, and N is an integer. In the example of FIG. 1, the antennas are represented as a1-aN. The linear array of antennas a1-aN is shown as being placed along the X-axis. The adjacent antennas in the linear array of antennas a1-aN are separated by a spacing d, so the antennas a1 and a2 are placed at 'd' distance from each other.

Further, the receive antenna unit 100 includes an additional antenna b1. The additional antenna b1 is at a predefined offset from at least one antenna in the linear array of antennas a1-aN. The predefined offset is $(\alpha, \beta)$ from the antenna a1 in the linear array of antennas a1-aN, as shown in FIG. 1. The term $\alpha$ is a distance of the additional antenna b1 from the Z axis, and the term $\beta$ is a distance of the additional antenna b 1 from the X axis. In one embodiment, the additional antenna is not in XZ plane, and a perpendicular distance of the additional antenna b1 from the XZ plane is $\gamma$. In one embodiment, the predefined offset is a multiple of $\lambda/2$, where $\lambda$ is an operating wavelength of the receive antenna unit 100. In an embodiment, d is $\lambda/2$, $\alpha$ is $\lambda/4$, $\beta$ is $\lambda/2$, and $\gamma$ is 0. In an embodiment, the spacing d between antennas in the linear array of antennas is a multiple of $\lambda/2$.

For ease of understanding, consider an embodiment in which the linear array of antennas has three antennas (a1, a2 and a3). The equation (1) below is a mathematical representation of the signal received at the receive antenna unit 100 from an obstacle 102. The signal 'r' in equation (1) represents a signal obtained after a signal processing unit processes the signal that is received by the receive antenna unit 100. In an embodiment, the signal 'r' represents a signal obtained after performing 2D FFT on the signal received at each antenna in the receive antenna unit 100 from the obstacle.

$$ r = A[1 \quad e^{-jw_x} \quad e^{-j2w_x} \quad e^{-j\psi}] \tag{1} $$

where $w_{xx}$ is azimuth frequency, and A is the complex amplitude corresponding to the obstacle. The term $\psi$ is the phase at the additional antenna b1 and is given by

$$ \psi = w_z + \frac{\alpha}{d} w_x $$

where $w_z$ is elevation frequency. The terms $w_x$ and $w_z$ are defined as:

$$ w_x = \frac{2\pi}{\lambda} d \sin(\theta)\cos(\phi) \tag{2} $$

$$w_z = \frac{2\pi}{\lambda} \beta \sin(\phi) \tag{3}$$

In equation (1), the component $e^{-jw_x}$ represents a factor as a result of the antenna a1, the component $e^{-j2w_x}$ represents a factor as a result of the antenna a2, and the component $e^{-j\psi}$ represents a factor as a result of the antenna b1. An angle 104 ($\theta$) represents an azimuth angle between the obstacle 102 and the antenna unit 100. An angle 108 ($\Phi$) represents an elevation angle between the obstacle 102 and the antenna unit 100. The azimuth angle ($\theta$) 104 is an angle between the Y axis and the projection of a vector from antenna a1 to the obstacle 102 on the XY plane. The elevation angle ($\phi$) 108 is an angle between a vector from antenna a1 to the obstacle 102 and the XY plane. In at least one example, the receive antenna unit 100 is used for estimating position of multiple obstacles at a fixed distance from the receive antenna unit 100 and having same relative velocity with respect to the radar apparatus. In one example, the receive antenna unit 100 is used for estimating the position of multiple obstacles, which are at different distances and have different relative velocities with respect to the radar apparatus. For example, the receive antenna unit 100 is used for estimating a position of two obstacle A and B, in which A is at 1m from the radar apparatus, B is at 1.2m from the radar apparatus, the relative velocity of A is 5m/s, and the relative velocity of B is 4.5m/s. In an additional example, the receive antenna unit 100 is used for estimating a position of two obstacles that are detected in different bins of a 2D FFT grid, but their signals in the 2D FFT domain interfere with each other. For example, a first obstacle (detected in a first bin of a 2D FFT grid) can have an attenuated signal representing the first obstacle in a second bin. This attenuated signal interferes with position estimation of a second obstacle detected in the second bin. In an embodiment, the receive antenna unit 100 estimates position of upto (N-1) obstacles when the linear array of antennas a1-aN has N antennas.

FIG. 2(a) shows a radar apparatus 200. The radar apparatus 200 includes a transmit antenna unit 205, a receive antenna unit 210 and a signal processing unit 215. The receive antenna unit 210 is similar to the receive antenna unit 100 in connection and operation.

The radar apparatus 200 resolves obstacles in the dimensions of range, relative velocity and angle. To accurately estimate position of the obstacle, the obstacle is resolved in any one of these dimensions. Accordingly, if multiple obstacles are located at the same distance from the radar apparatus 200 and have a same relative velocity with respect to the radar apparatus 200, the radar apparatus 200 resolves these obstacles in angle dimension. The radar apparatus 200 estimates position of multiple obstacles at a fixed distance from the radar apparatus 200 and having fixed relative velocity with respect to the radar apparatus 200. In one embodiment, the radar apparatus 200 estimates position of multiple obstacles, and each of the obstacles is at a different distance from the radar apparatus 200.

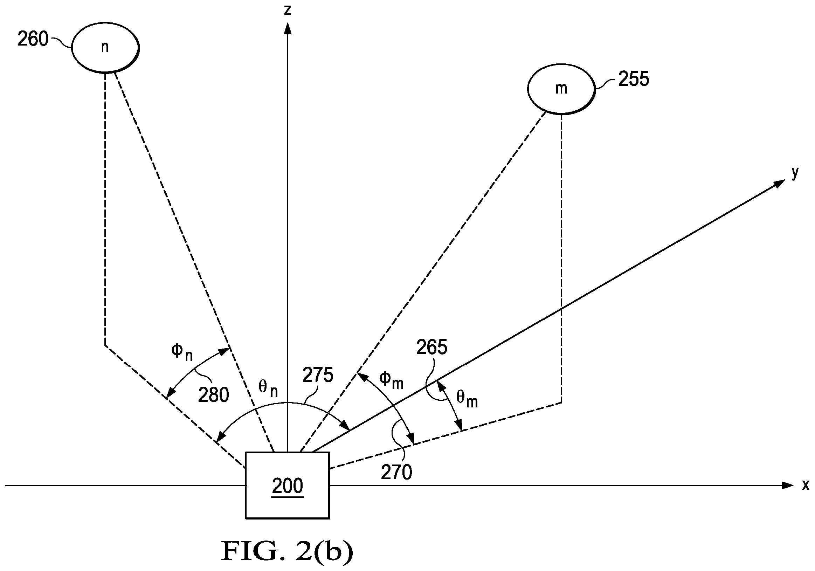

FIG. 2(b) shows operation of a radar apparatus 200, with an example of obstacles 'm' 255 and 'n' 260. In this example, the receive antenna unit 210 (FIG. 2a) includes: three antennas a1, a2 and a3 forming the linear array of antennas; and the additional antenna b1. The term $\theta_m$ 265 is an azimuth angle associated with the obstacle 'm' 255, and the term $\phi_m$ 270 is an elevation angle associated with the obstacle 'm' 255. Similarly, the term $\theta_n$ 275 is an azimuth angle associated with the obstacle 'n' 260, and the term $\phi_n$ 280 is an elevation angle associated with the obstacle 'n' 260. As shown in FIG. 2(b), the azimuth angle $\theta_n$ 275 is interpreted as an angle in negative direction.

The transmit antenna unit 205 is configured to transmit an RF (radio frequency) signal and the receive antenna unit 210 receives a scattered signal from the obstacle 'm' 255 and 'n' 260. The transmitted RF signal includes multiple frames of the RF signal generated by the transmitter and the received scattered RF signal includes multiple frames of the signal received from the obstacles. The receive antenna unit 210 tracks signal from the obstacles at the frames. The signal received at the receive antenna unit 210 at a frame 'k' from the obstacles 'm' 255 and 'n' 260 is represented as:

$$\begin{bmatrix} r_{a1,k} \\ r_{a2,k} \\ r_{a3,k} \\ r_{b1,k} \end{bmatrix} = A_{m,k} \begin{bmatrix} 1 \\ e^{-jw_{xm}} \\ e^{-j2w_{xm}} \\ e^{-j\psi_m} \end{bmatrix} + A_{n,k} \begin{bmatrix} 1 \\ e^{-jw_{xn}} \\ e^{-j2w_{xn}} \\ e^{-j\psi_n} \end{bmatrix} \tag{4}$$

where $r_{a1,k}\ r_{a2,k}\ r_{a3,k}\ r_{b1,k}$ are the signals received at frame k at the antennas a1, a2, a3 and b1 respectively. The terms $r_{a1,k}\ r_{a2,k}\ r_{a3,k}\ r_{b1,k}$ represent signal received at the respective antennas after processing in the signal processing unit 215. For example, in an embodiment, the signal $r_{a1,k}$ represents the signal received from the obstacle 'm' 255 and 'n' 260 at the antenna a1 for frame k after performing 2D FFT. The terms $A_{m,k}$ and $A_{n,k}$ are the complex amplitudes of the two obstacles 'm' 255 and 'n' 260 respectively at frame k. The term $w_{xm}$ is an azimuth frequency associated with the obstacle 'm' 255, and the term $w_{xn}$ is an azimuth frequency associated with the obstacle 'n' 260. The term $\psi_m$ is referred

to as a phase due to the obstacle 'm' 255 at the additional antenna b 1, and the term $\psi_n$ is referred to as a phase due to the obstacle 'n' 260 at the additional antenna b1. Also, $e^{-j\psi_m}$ is referred to as a complex phasor associated with the obstacle 'm' 255 at the additional antenna b1, and $e^{-j\psi_n}$ is referred to as a complex phasor associated with the obstacle 'n' 260 at the additional antenna b1. The azimuth frequency $w_{xm}$ and $w_{xn}$ are defined as:

$$w_{xm} = \frac{2\pi}{\lambda} d \sin(\theta_m) \cos(\phi_m) \tag{5}$$

$$w_{xn} = \frac{2\pi}{\lambda} d \sin(\theta_n) \cos(\phi_n) \tag{6}$$

An elevation frequency ($w_{zm}$) associated with the obstacle 'm' 255, and an elevation frequency ($w_{zn}$) associated with the obstacle 'n' 260, are defined as:

$$w_{zm} = \frac{2\pi}{\lambda} \beta \sin(\phi_m) \tag{7}$$

$$w_{zn} = \frac{2\pi}{\lambda} \beta \sin(\phi_n) \tag{8}$$

The phase ($\psi_m$) due to the obstacle 'm' 255 at the additional antenna b1, and the phase ($\psi_n$) due to the obstacle 'n' 260 at the additional antenna b1, are defined as:

$$\psi_m = w_{zm} + \frac{\alpha}{d} w_{xm} \tag{9}$$

$$\psi_n = w_{zn} + \frac{\alpha}{d} w_{xn} \tag{10}$$

where $\theta_m$ 265 is the azimuth angle associated with the obstacle 'm' 255, and $\phi_m$ 270 is the elevation angle associated with the obstacle 'm' 255. Similarly, $\theta_n$ 275 is the azimuth angle associated with the obstacle 'n' 260, and $\phi_n$ 280 is the elevation angle associated with the obstacle 'n' 260.

The signal processing unit 215 is configured to estimate the azimuth frequency associated with each obstacle from the signal received from the obstacles. Accordingly, the signal processing unit 215 estimates azimuth frequency $w_{xm}$ and $w_{xn}$ associated with obstacles 'm' 255 and 'n' 260 respectively, from the signal received from the obstacles 'm' 255 and 'n' 260 at the linear array of antennas a1, a2 and a3. The estimation of azimuth frequency is performed by a conventional technique, such as root MUSIC (multiple signal classification) technique, spectral MUSIC technique, and techniques based on maximum likelihood estimation. By using these techniques, a radar apparatus with N antennas can estimate azimuth frequency of N-1 obstacles. The estimation provides estimated azimuth frequency $w_{xm}$ and $w_{xn}$ associated with each of the obstacles 'm' 255 and 'n' 260. The signal processing unit 215 estimates the complex amplitude associated with each obstacle from the estimated azimuth frequency associated with the obstacles, and from the signal received from the obstacles at the linear array of antennas a1, a2 and a3. Accordingly, the signal processing unit 215 estimates the $A_{m,k}$ and $A_{n,k}$, which are the complex amplitudes of the two obstacles 'm' 255 and 'n' 260 respectively, using equation (4) as follows:

$$A_{m,k} \begin{bmatrix} 1 \\ e^{-jw_{xm}} \\ e^{-2jw_{xm}} \end{bmatrix} + A_{n,k} \begin{bmatrix} 1 \\ e^{-jw_{xn}} \\ e^{-2jw_{xn}} \end{bmatrix} = \begin{bmatrix} r_{a1,k} \\ r_{a2,k} \\ r_{a3,k} \end{bmatrix} \tag{11}$$

$$\begin{bmatrix} 1 & 1 \\ e^{-jw_{xm}} & e^{-jw_{xn}} \\ e^{-2jw_{xm}} & e^{-2jw_{xn}} \end{bmatrix} \begin{bmatrix} A_{m,k} \\ A_{n,k} \end{bmatrix} = \begin{bmatrix} r_{a1,k} \\ r_{a2,k} \\ r_{a3,k} \end{bmatrix} \qquad (12)$$

Where the left matrix is denoted $S$ and the right vector is denoted $r_k(1{:}3)$.

$$\begin{bmatrix} A_{m,k} \\ A_{n,k} \end{bmatrix} = pinv(S)r_k(1{:}3) \qquad (13)$$

where, pinv(S) is a pseudo-inverse of S. In one embodiment, pinv(S) is defined as:

$$pinv(S) = (S^{H}S)^{-1}S^{H} \qquad (14)$$

where H is referred to as a conjugate transpose. Estimating pinv(S) involves inverting the 2X2 matrix ($S^{H}S$) as shown in equation (14). S is independent of the frame 'k'. Accordingly, after estimation, pinv(S) is used for all the successive frames. The term $r_{a1,k}$ represents the signal received at antenna a1 at frame k. Similarly, $r_{a2,k}$ represents the signal received at the antenna a2 at frame k. The signal processing unit 215 uses the frames of the signal received at the linear array of antennas a1, a2 and a3 for estimating the complex amplitude associated with each obstacle. The complex amplitude is estimated for each frame. For each frame, a value of $r_k(1{:}3)$ is measured, which is the signal received from the obstacles 'm' 255 and 'n' 260 at the linear array of antennas a1, a2 and a3. In an embodiment, for frame k, the estimate of the complex amplitudes $A_{m,k}$ and $A_{n,k}$, associated with the obstacles 'm' 255 and 'n' 260 respectively, is a least squares estimate. In another embodiment, for frame k, the estimate of the complex amplitudes $A_{m,k}$ and $A_{n,k}$, associated with the obstacles 'm' 255 and 'n' 260 respectively, is a weighted least squares estimate when an SNR (signal to noise ratio) at each antenna of the linear array of antennas is different (such as when SNR at a1, a2 and a3 is different, or when SNR at any antenna of the linear array of antennas a1, a2 and a3 changes across frames). The estimation of the complex amplitudes provides estimated complex amplitudes associated with each of the obstacles 'm' 255 and 'n' 260 for each frame.

The signal processing unit 215 estimates the complex phasor associated with each obstacle from the estimated complex amplitude associated with the obstacles, and from a signal received from the obstacles at the additional antenna. Accordingly, the signal processing unit 215 estimates the complex phasor $e^{-j\psi_m}$ and $e^{-j\psi_n}$ associated with the obstacles 'm' 255 and 'n' 260 respectively, from the complex amplitudes $A_{m,k}$ and $A_{n,k}$, associated with the obstacles 'm' 255 and 'n' 260 respectively and from the signal received from the obstacles 'm' 255 and 'n' 260 at the additional antenna b1. The signal processing unit 215 estimates the complex phasor $e^{-jw_m}$ and $e^{-j\psi_n}$ using equation (4) as follows:

$$A_{m,k}e^{jw_{zm}} + A_{n,k}e^{jw_{zn}} = r_{b1,k} \qquad (15)$$

$$\begin{bmatrix} A_{m,1} & A_{n,1} \\ A_{m,2} & A_{n,2} \\ \cdot & \cdot \\ A_{m,N_{fr}} & A_{n,N_{fr}} \end{bmatrix} \begin{bmatrix} e^{j\psi_m} \\ e^{j\psi_n} \end{bmatrix} = \begin{bmatrix} r_{b1,1} \\ r_{b1,2} \\ \cdot \\ r_{b1,N_{fr}} \end{bmatrix} \qquad (16)$$

Where the left matrix is denoted $T$ and the right vector is denoted $r_{b1}$.

$$\begin{bmatrix} e^{j\psi_m} \\ e^{j\psi_n} \end{bmatrix} = pinv(T)r_{b1} \qquad (17)$$

where, pinv(T) is a pseudo-inverse of T. In one embodiment, pinv(T) is defined as:

$$\text{pinv}(T) = (T^H T)^{-1} T^H \qquad (18)$$

where H is referred to as a conjugate transpose. Estimating pinv(T) involves inverting the 2X2 matrix ($T^H T$) of equation (18). Equation (16) represents equation (15) at the frames 'k', where k = 1, 2...$N_{fr}$, and where $N_{fr}$ is the $N^{th}$ frame. The signal processing unit 215 uses the signal received at the additional antenna b1 across the frames for estimating the complex phasor associated with each obstacle. The signal processing unit 215 also uses the estimated complex amplitude associated with the obstacles across the frames for estimating the complex phasor associated with each obstacle. Accordingly, $A_{m,1}$ and $A_{n,1}$ in equation (16) respectively represent: complex amplitude because of obstacle m at frame 1; and complex amplitude because of obstacle n at frame 1. Also, $r_{b1,1}$ represents the signal received at the additional antenna b1 at frame 1. Similarly, $A_{m,Nfr}$ and $A_{n,Nfr}$ in equation (16) respectively represent: complex amplitude because of obstacle m at frame $N_{fr}$; and complex amplitude because of obstacle n at frame $N_{fr}$. Also, $r_{b1,Nfr}$ represents the signal received at the additional antenna b 1 at frame $N_{fr}$. In an embodiment, the estimate of the complex phasor $e^{-j\psi_m}$ and $e^{-j\psi_n}$ associated with the obstacle 'm' 255 and 'n' 260 respectively, is a least squares estimate. In another embodiment, the estimate of the complex phasor $e^{-j\psi_m}$ and $e^{-j\psi_n}$ associated with the obstacle 'm' 255 and 'n' 260 respectively, is a weighted least squares estimate when the SNR at the additional antenna varies across the frames.

The signal processing unit 215 estimates the elevation frequency ($w_{zm}$) associated with the obstacle 'm' 255, and the elevation frequency ($w_{zn}$) associated with the obstacle 'n' 260, from the complex phasor $e^{-j\psi_m}$ and $e^{-j\psi_n}$ and from the estimated azimuth frequency $w_{xm}$ and $w_{xn}$, using the following equations:

$$w_{zm} = angle\left(e^{j\psi_m}e^{-\frac{\alpha}{d}w_{xm}}\right) \qquad (19)$$

$$w_{zn} = angle\left(e^{j\psi_n}e^{-\frac{\alpha}{d}w_{xn}}\right) \qquad (20)$$

The signal processing unit 215 is further configured to estimate the elevation angle $\phi_m$ 270 and the azimuth angle $\theta_m$ 265 associated with the obstacle 'm' 255, from the estimated elevation frequency $w_{zm}$ using equation (7) and equation (5) respectively as shown below:

From equation (7):

$$\phi_m = sin^{-1}\left(\frac{w_{zm}}{2\pi\beta/\lambda}\right) \qquad (21)$$

And from equation (5):

$$\theta_m = sin^{-1}\left(\frac{w_{xm}}{2\pi d cos(\phi_m)/\lambda}\right) \qquad (22)$$

Similarly, the signal processing unit 215 is configured to estimate the elevation angle $\phi_n$ 280 and the azimuth angle $\theta_n$ 275 associated with the obstacle 'n' 260, from the estimated elevation frequency $w_{zn}$ using equation (8) and equation (6) respectively. In one embodiment, the signal processing unit 215 estimates the azimuth angle and the elevation angle from the estimated complex phasor associated with each obstacle, and from the estimated azimuth frequency associated with each obstacle.

The radar apparatus 200 provides an efficient solution for resolving the azimuth angle and elevation angle of two obstacles 'm' 255 and 'n' 260, which are at a same distance from the radar apparatus 200 and have the same relative velocity with respect to the radar apparatus 200. Also, the radar apparatus 200 is suitable for operation with fewer antennas than conventional techniques. Some conventional techniques use a 2D array of antennas, while others use an L shaped antenna with a linear array of antennas in orthogonal directions, to estimate the azimuth angle and the elevation angle of multiple obstacles. In contrast, with N antennas in the linear array of antennas and with one additional antenna in the receive antenna unit 210, the radar apparatus 200 is able to estimate azimuth angle and elevation angle ofN-1 obstacles that are at the same range from the radar apparatus 200 and that have the same relative velocity with respect to the radar apparatus 200.

Also, processing by the signal processing unit 215 in the radar apparatus 200 is more efficient (compared to conventional radar apparatus), because the signal processing unit 215 implements a closed form solution to operate effectively, even without searching. Accordingly, the performance of the radar apparatus 200 is more robust and does not suffer from performance degradation due to false peaks or missed detection of obstacles that severely affect search-based solutions, especially at low SNRs (signal to noise ratio). Further, this technique is effective, even without computationally intensive tasks, such as finding eigenvalues and eigenvectors or inverting large matrices. The radar apparatus 200 provides an effective solution for estimating the azimuth angle and the elevation angle, even when an angular separation of the two obstacles 'm' 255 and 'n' 260 is small.

FIG. 2(c)-1 through FIG. 2(c)-2 show beam-width of a transmit antenna unit 205 in a radar apparatus. The transmit antenna unit 205 is similar in connection and operation to the transmit antenna unit 205 in the radar apparatus 200. The transmit antenna unit 205 includes multiple transmit antennas. In this example, the transmit antenna unit 205 is shown with two transmit antenna Tx1 and Tx2.

As shown in FIG. 2(c)-1, the transmit antennas Tx1 and Tx2 operate together, which increases the power and focus of the beam-width 230. Accordingly, the transmit antenna unit 205 provides a beam-width 230, which is narrow and has high SNR (signal to noise ratio). This arrangement is used by the radar apparatus 200 for estimating position of an obstacle in a first range. In an embodiment, this arrangement is used by the radar apparatus 200 for estimating position of a far-range obstacle.

As shown in FIG. 2(c)-2 and FIG. 2(c)-3, the transmit antennas Tx1 and Tx2 operate in a sequence, so: (a) first, Tx1 is activated, and Tx2 is inactived; and (b) second, Tx1 in inactivated, and Tx2 is activated. The beam-width 235 and 240, produced by Tx1 and Tx2 respectively, is wide and accordingly used for estimating position of an obstacle that is relatively near the radar apparatus 200 and in a wide field of view. Accordingly, at a given time instant, only one transmit antenna is activated. In an embodiment, at a given time instant, a set of transmit antennas is activated. The arrangements in FIG. 2(c)-2 and FIG. 2(c)-3 are used by the radar apparatus 200 for estimating position of an obstacle in a second range, where the first range is greater than the second range.

In an embodiment, the arrangement in FIG. 2(c)-2 and FIG. 2(c)-3 is used by the radar apparatus 200 for estimating position of a near-range obstacle, where the far-range is greater than the near-range. In an embodiment, the transmit antennas operate together to estimate position of each obstacle in a first range and operate in a sequence to estimate position of each obstacle in a second range, where the first range is greater than the second range. The arrangements in FIG. 2(c)-2 and FIG. 2(c)-3 are used for improving decorrelation in the received signal across successive frames in the radar apparatus 200. Such decorrelation improves the angle estimation performance of the radar apparatus 200.

In an embodiment, the radar apparatus 200 is installed on a vehicle, and a motion in the vehicle improves decorrelation in the radar apparatus 200. In an embodiment, the motion is specifically introduced in the vehicle to improve decorrelation in the radar apparatus 200. In an embodiment, the introduced motion has the order of the wavelength of the RF signal transmitted by the radar apparatus 200. In an embodiment, the motion is a back and forth movement of the vehicle, such that a change in the location of the vehicle is insignificant.

FIG. 3 shows a radar apparatus 300 according to an embodiment. The radar apparatus 300 includes a transmit antenna unit 305 and a receive antenna unit 320. A transmitter 310 is coupled to the transmit antenna unit 305. A control module 315 is coupled to the transmitter 310. The receive antenna unit 320 is coupled to a receiver 325. Amixer 330 is coupled to the receiver 325 and to the transmitter 310. An analog to digital converter (ADC) 335 is coupled to the mixer 330, and an FFT (fast fourier transform) module 340 is coupled to the ADC 335. A signal processing unit 345 is coupled to the FFT module 340.

The transmit antenna unit 305 transmits an outbound RF (radio frequency) signal to multiple obstacles, and the receive antenna unit 320 receives an inbound RF signal from the obstacles. The outbound RF signal is scattered by the obstacles to generate the inbound RF signal. The outbound RF signal includes multiple frames of the RF signal generated by the transmitter 310, and the inbound RF signal includes multiple frames of the signal received from the obstacles. The control module 315 provides a control signal to the transmitter 310. The transmitter 310 generates the outbound RF signal, and the receiver 325 receives the inbound RF signal from the receive antenna unit 320.

In one embodiment, the transmit antenna unit 305 includes one or more transmit antennas coupled to the transmitter 310. In operation, the transmit antenna unit 305 is analogous to the transmit antenna unit 205 in the radar apparatus 200. Accordingly, the transmit antenna unit 305 includes multiple transmit antennas, which operate together to estimate position of each obstacle in a first range and operate in a sequence to estimate position of each obstacle in a second range, where the first range is greater than the second range. In an embodiment, the receive antenna unit 320 includes one or more antennas coupled to the receiver 325.

In an embodiment, the receive antenna unit 320 is analogous to the receive antenna unit 210 and accordingly includes a linear array of antenna and an additional antenna at a predefined offset from at least one antenna in the linear array of antennas. In an embodiment, each antenna in the linear array of antenna and the additional antenna has a separate receiver path including receiver, mixer and ADC. Each receiver path is coupled to the signal processing unit 345.

The mixer 330 receives the inbound RF signal from the receiver 325 and generates a demodulated signal. The ADC 335 receives the demodulated signal from the mixer 330 and generates a digital signal in response to the demodulated signal. The FFT module 340 receives the digital signal from the ADC 335 and is configured to transform the digital signal from a time domain to a frequency domain. The signal processing unit 345 is configured to process the digital signal received from the FFT module 340. In operation, the signal processing unit 345 is analogous to the signal processing unit 215. The signal processing unit 345 is used in estimating position of multiple obstacles at a fixed distance from the radar apparatus 300 and having the same relative velocity with respect to the radar apparatus 300. In one example, the receive antenna unit 100 is used for estimating the position of multiple obstacles, which are at different distances and have different relative velocities with respect to the radar apparatus 300. For example, the receive antenna unit 320 is used for estimating a position of two obstacles A and B, in which A is at 1m from the radar apparatus, B is at 1.2m from the radar apparatus, the relative velocity of A is 5m/s, and the relative velocity of B is 4.5m/s. In another example, the receive antenna unit 320 is used for estimating a position of two obstacles that are detected in different bins of a 2D FFT grid, but their signals in the 2D FFT domain interfere with each other. For example, a first obstacle (which is detected in a first bin of a 2D FFT grid) can have an attenuated signal representing the first obstacle in a second bin. This attenuated signal interferes with position estimation of a second obstacle detected in the second bin. The signal processing unit 345 estimates an azimuth angle and an elevation angle associated with each obstacle, in the same manner as performed by the signal processing unit 215. The signal processing unit 345 estimates an azimuth frequency, a complex amplitude and a complex phasor associated with each obstacle by processing the digital signal received from the FFT module 340, using the same technique as used by the signal processing unit 215. Accordingly, the frames of the signal received from the obstacles at the linear array of antennas in the receive antenna unit 320 are used for estimating the azimuth frequency and the complex amplitude associated with each obstacle, and the frames of the signal received from the obstacles at the additional antenna in the receive antenna unit 320 are used for estimating the complex phasor associated with each obstacle. This process is the same as described hereinabove in connection with FIG. 2(a). In one example, all components of the radar apparatus 300 are integrated on a chip. In another example, all components of the radar apparatus 300 except the signal processing unit 350 are integrated on a chip.

The radar apparatus 300 provides an efficient solution for resolving the azimuth angle and elevation angle of two obstacles 'm' 255 and 'n' 260, when 'm' 255 and 'n' 260 are at a same distance from the radar apparatus 300 and have the same relative velocity with respect to the radar apparatus 300. The radar apparatus 300 is effective, even with fewer antennas than conventional techniques. With N antennas in the linear array of antennas and one additional antenna in the receive antenna unit 320, the radar apparatus 300 is able to detect N-1 obstacles that are at the same range from the radar apparatus 300 and have the same relative velocity with respect to the radar apparatus 300.

The radar apparatus 300 also estimates the azimuth angle and elevation angle of these N-1 obstacles. Also, processing by the signal processing unit 345 in the radar apparatus 300 is more efficient (compared to conventional radar apparatus), because the signal processing unit 345 operates effectively, even without searching, inversion of large matrices, or finding eigenvalues and eigenvectors for estimating azimuth and elevation angles. The technique for estimating the azimuth angle and the elevation angle in the signal processing unit 345 is less complex, and also does not suffer from performance degradation due to false peaks/missed detection of obstacles that severely effect search based solutions, especially at low SNRs (signal to noise ratio).

The radar apparatus 300 provides an effective solution for estimating the azimuth angle and the elevation angle, even when an angular separation of the two obstacles 'm' 255 and 'n' 260 is small. The transmit antenna unit 305 includes multiple transmit antennas. The transmit antennas operate together to estimate position of each obstacle in a first range and operate in a sequence to estimate position of each obstacle in a second range, where the first range is greater than the second range. This improves decorrelation of signals received at the receive antenna unit 320 in the radar apparatus 300, and thereby improves angle estimation performance.

Accordingly, an embodiment provides a radar apparatus for estimating position of multiple obstacles. The radar apparatus includes a receive antenna unit. The receive antenna unit includes a linear array of antennas and an additional antenna at a predefined offset from at least one antenna in the linear array of antennas. The radar apparatus also includes a signal processing unit. The signal processing unit estimates an azimuth frequency associated with each obstacle from a signal received from the obstacles at the linear array of antennas. The signal processing unit also estimates a complex amplitude associated with each obstacle from the estimated azimuth frequency associated with the obstacles and from the signal received from the obstacles at the linear array of antennas. The signal processing unit estimates a complex phasor associated with each obstacle from the estimated complex amplitude associated with the obstacles and from a signal received from the obstacles at the additional antenna. Also, the signal processing unit estimates an azimuth angle and an elevation angle associated with each obstacle from the estimated complex phasor associated with each obstacle and from the estimated azimuth frequency associated with each obstacle.

Another embodiment provides a method of estimating position of multiple obstacles using a radar apparatus. The method includes estimating an azimuth frequency associated with each obstacle from a signal received from the obstacles at the radar apparatus. A complex amplitude associated with each obstacle is estimated from the estimated azimuth frequency associated with the obstacles and from the signal received from the obstacles at the radar apparatus. A complex phasor associated with each obstacle is estimated from the estimated complex amplitude associated with the obstacles and from the signal received from the obstacles at the radar apparatus. An azimuth angle and an elevation angle associated with each obstacle are estimated from the estimated complex phasor associated with each obstacle and from the estimated azimuth frequency associated with each obstacle.

Additionally, an embodiment provides a radar apparatus for estimating position of multiple obstacles. The radar apparatus includes a transmit antenna unit. A transmitter is coupled to the transmit antenna unit and generates the outbound RF (radio frequency) signal. The radar apparatus also includes a receive antenna unit. A receiver is coupled to the receive antenna unit and receives the inbound RF signal from the receive antenna unit. The outbound RF signal is scattered by the obstacles to generate the inbound RF signal. Amixer is coupled to the receiver and to the transmitter and demodulates the inbound RF signal to generate a demodulated signal. An analog to digital converter (ADC) is coupled to the mixer and generates a digital signal in response to the demodulated signal received from the mixer. An FFT (fast fourier transform) module is coupled to the ADC and transforms the digital signal from a time domain to a frequency domain. A signal processing unit is coupled to the FFT module and processes the digital signal. The signal processing unit estimates an azimuth frequency associated with each obstacle from the digital signal. The signal processing unit also estimates a complex amplitude associated with each obstacle from the estimated azimuth frequency associated with the obstacles and from the digital signal. A complex phasor associated with each obstacle is estimated from the estimated complex amplitude associated with the obstacles. An azimuth angle and an elevation angle associated with each obstacle are estimated from the estimated complex phasor associated with each obstacle and from the estimated azimuth frequency associated with each obstacle.

Modifications are possible in the described embodiments, and other embodiments are possible, within the scope of the claims.

**Claims**

1. A radar apparatus for estimating position of a plurality of obstacles, the radar apparatus comprising:

   a receive antenna unit, including:

      a linear array of antennas; and
      an additional antenna at a predefined offset from at least one antenna in the linear array of antennas;

   and
   a signal processing unit configured to:

      estimate an azimuth frequency associated with each of the obstacles from a signal received from the plurality of obstacles at the linear array of antennas;
      estimate a complex amplitude associated with each obstacle from the estimated azimuth frequency associated with the plurality of obstacles and from the signal received from the plurality of obstacles at the linear array of antennas;
      estimate a complex phasor associated with each obstacle from the estimated complex amplitude associated with the plurality of obstacles and from a signal received from the plurality of obstacles at the additional antenna; and
      estimate an azimuth angle and an elevation angle associated with each obstacle from the estimated complex phasor associated with each obstacle and from the estimated azimuth frequency associated with each obstacle.

2. The radar apparatus of claim 1, wherein a plurality of frames of the signal received from the plurality of obstacles at the linear array of antennas is used for estimating the azimuth frequency; and wherein the complex amplitude is estimated for each frame of the plurality of frames; and/or
   wherein a plurality of frames of the signal received from the plurality of obstacles at the additional antenna is used for estimating the complex phasor associated with each obstacle.

3. The radar apparatus of claim 1, wherein the estimate of the complex amplitude and/or the complex phasor associated with each obstacle is one of a least squares estimate and a weighted least squares estimate.

**4.** The radar apparatus of claim 1, further comprising: a transmit antenna unit including a plurality of transmit antennas that operate together to estimate position of each obstacle in a first range and that operate in a sequence to estimate position of each obstacle in a second range, wherein the first range is greater than the second range.

**5.** A vehicle comprising the radar apparatus of claim 1.

**6.** A method of estimating position of a plurality of obstacles using a radar apparatus comprising a receive antenna unit, which includes a linear array of antennas and an additional antenna at a predefined offset from at least one antenna in the linear array of antennas, the method comprising:

estimating an azimuth frequency associated with each of the obstacles from a signal received from the plurality of obstacles at the linear array of antennas;
estimating a complex amplitude associated with each obstacle from the estimated azimuth frequency associated with the plurality of obstacles and from the signal received from the plurality of obstacles at the linear array of antennas;
estimating a complex phasor associated with each obstacle from the estimated complex amplitude associated with the plurality of obstacles and from a signal received from the plurality of obstacles at the additional antenna; and
estimating an azimuth angle and an elevation angle associated with each obstacle from the estimated complex phasor associated with each obstacle and from the estimated azimuth frequency associated with each obstacle.

**7.** The method of claim 6, further comprising: estimating the azimuth frequency and the complex amplitude associated with each obstacle from a plurality of frames of the signal received from the plurality of obstacles at the linear array of antennas and/or further comprising: estimating the complex phasor associated with each obstacle from a plurality of frames of the signal received from the plurality of obstacles at the additional antenna.

**8.** The method of claim 6, wherein:

the estimate of complex amplitude associated with each obstacle is one of a least squares estimate and a weighted least squares estimate; and
the estimate of the complex phasor associated with each obstacle is one of a least squares estimate and a weighted least squares estimate
and/or wherein the radar apparatus includes a transmit antenna unit, which includes a plurality of transmit antennas that operate together to estimate position of each obstacle in a first range and that operate in a sequence to estimate position of each obstacle in a second range, wherein the first range is greater than the second range.

**9.** The radar apparatus of claim 1, further comprising:

a transmit antenna unit;
a transmitter coupled to the transmit antenna unit and configured to generate an outbound RF (radio frequency) signal;
a receiver coupled to the receive antenna unit and configured to receive an inbound RF signal from the receive antenna unit, wherein the outbound RF signal is scattered by the plurality of obstacles to generate the inbound RF signal;
a mixer coupled to the receiver and to the transmitter and configured to demodulate the inbound RF signal to generate a demodulated signal;
an analog to digital converter (ADC) coupled to the mixer and configured to generate a digital signal in response to the demodulated signal received from the mixer;
an FFT (fast fourier transform) module coupled to the ADC and configured to transform the digital signal from a time domain to a frequency domain; and
the signal processing unit coupled to the FFT module and configured to:
process the digital signal.

**10.** The radar apparatus of claim 9, wherein the outbound RF signal includes a plurality of frames of the RF signal generated by the transmitter, and the inbound RF signal includes a plurality of frames of the signal received from the plurality of obstacles.

**11.** The radar apparatus of claim 10, wherein:

the plurality of frames of the signal received from the plurality of obstacles at the linear array of antennas is used for estimating the azimuth frequency and the complex amplitude associated with each obstacle; and

the plurality of frames of the signal received from the plurality of obstacles at the additional antenna is used for estimating the complex phasor associated with each obstacle;

and/or wherein the transmit antenna unit includes a plurality of transmit antennas that operate together to estimate position of each obstacle in a first range and that operate in a sequence to estimate position of each obstacle in a second range, wherein the first range is greater than the second range.

**Patentansprüche**

**1.** Radarvorrichtung zum Schätzen einer Position von mehreren Hindernissen, wobei die Radarvorrichtung umfasst: eine Empfangsantenneneinheit, enthaltend:

ein lineares Array von Antennen; und

eine zusätzliche Antenne mit einem vordefinierten Offset von mindestens einer Antenne in dem linearen Array von Antennen; und

eine Signalverarbeitungseinheit, ausgelegt zum:

Schätzen einer mit jedem der Hindernisse assoziierten Azimuthfrequenz anhand eines von den mehreren Hindernissen bei dem linearen Array von Antennen empfangenen Signals;

Schätzen einer mit jedem Hindernis assoziierten komplexen Amplitude anhand der mit den mehreren Hindernissen assoziierten geschätzten Azimuthfrequenz und anhand des von den mehreren Hindernissen an dem linearen Array von Antennen empfangenen Signals;

Schätzen eines mit jedem Hindernis assoziierten komplexen Phasors anhand der mit den mehreren Hindernissen assoziierten geschätzten komplexen Amplitude und anhand eines von den mehreren Hindernissen an der zusätzlichen Antenne empfangenen Signals; und

Schätzen eines Azimuthwinkels und eines Höhenwinkels, mit jedem Hindernis assoziiert, anhand des mit jedem Hindernis assoziierten geschätzten komplexen Phasors und anhand der mit jedem Hindernis assoziierten geschätzten Azimuthfrequenz.

**2.** Radarvorrichtung nach Anspruch 1, wobei mehrere Rahmen des von den mehreren Hindernissen an dem linearen Array von Antennen empfangenen Signals zum Schätzen der Azimuthfrequenz verwendet werden; und wobei die komplexe Amplitude für jeden Rahmen der mehreren Rahmen geschätzt wird; und/oder wobei mehrere Rahmen des von den mehreren Hindernissen an der zusätzlichen Antenne empfangenen Signals zum Schätzen des mit jedem Hindernis assoziierten komplexen Phasors verwendet werden.

**3.** Radarvorrichtung nach Anspruch 1, wobei der Schätzwert der komplexen Amplitude und/oder des komplexen Phasors, mit jedem Hindernis assoziiert, ein Schätzwert der kleinsten Quadrate und/oder ein Schätzwert der gewichteten kleinste Quadrate ist.

**4.** Radarvorrichtung nach Anspruch 1, weiter umfassend: eine Sendeantenneneinheit einschließlich mehrere Sendeantennen, die zusammen arbeiten, um eine Position jedes Hindernisses in einer ersten Entfernung zu schätzen, und die in einer Sequenz arbeiten, um eine Position jedes Hindernisses in einer zweiten Entfernung zu schätzen, wobei die erste Entfernung größer ist als die zweite Entfernung.

**5.** Fahrzeug umfassend die Radarvorrichtung nach Anspruch 1.

**6.** Verfahren zum Schätzen einer Position von mehreren Hindernissen unter Verwendung einer Radarvorrichtung umfassend eine Empfangsantenneneinheit, die ein lineares Array von Antennen und eine zusätzliche Antenne mit einem vordefinierten Offset von mindestens einer Antenne in dem linearen Array von Antennen enthält, wobei das Verfahren umfasst:

Schätzen einer mit jedem der Hindernisse assoziierten Azimuthfrequenz anhand eines von den mehreren Hindernissen bei dem linearen Array von Antennen empfangenen Signals;

Schätzen einer mit jedem Hindernis assoziierten komplexen Amplitude anhand der mit den mehreren Hindernissen assoziierten geschätzten Azimuthfrequenz und anhand des von den mehreren Hindernissen an dem linearen Array von Antennen empfangenen Signals;

Schätzen eines mit jedem Hindernis assoziierten komplexen Phasors anhand der mit den mehreren Hindernissen assoziierten geschätzten komplexen Amplitude und anhand eines von den mehreren Hindernissen an der zusätzlichen Antenne empfangenen Signals; und

Schätzen eines Azimuthwinkels und eines Höhenwinkels, mit jedem Hindernis assoziiert, anhand des mit jedem Hindernis assoziierten geschätzten komplexen Phasors und anhand der mit jedem Hindernis assoziierten geschätzten Azimuthfrequenz.

7. Verfahren nach Anspruch 6, weiter umfassend: Schätzen der Azimuthfrequenz und der komplexen Amplitude, mit jedem Hindernis assoziiert, anhand von mehreren Rahmen des von den mehreren Hindernissen an dem linearen Array von Antennen empfangenen Signals und/oder weiter umfassend: Schätzen des mit jedem Hindernis assoziierten komplexen Phasors anhand mehrerer Rahmen des von den mehreren Hindernissen an der zusätzlichen Antenne empfangenen Signals.

8. Verfahren nach Anspruch 6, wobei:

der Schätzwert der mit jedem Hindernis assoziierten komplexen Amplitude ein Schätzwert der kleinsten Quadrate und/oder ein Schätzwert der gewichteten kleinsten Quadrate ist; und

der Schätzwert des mit jedem Hindernis assoziierten komplexen Phasors ein Schätzwert der kleinsten Quadrate und/oder ein Schätzwert der gewichteten kleinsten Quadrate ist und/oder wobei die Radarvorrichtung eine Sendeantenneneinheit enthält, die mehrere Sendeantennen enthält, die zusammen arbeiten, um eine Position jedes Hindernisses in einer ersten Entfernung zu schätzen, und die in einer Sequenz arbeiten, um eine Position jedes Hindernisses in einer zweiten Entfernung zu schätzen, wobei die erste Entfernung größer ist als die zweite Entfernung.

9. Radarvorrichtung nach Anspruch 1, weiter umfassend:

eine Sendeantenneneinheit;

einen Sender, der an die Sendeantenneneinheit gekoppelt und ausgelegt ist zum Erzeugen eines abgehenden HF- (Hochfrequenz-) Signals;

einen Empfänger, der an die Empfangsantenneneinheit gekoppelt und ausgelegt ist zum Empfangen eines ankommenden HF-Signals von der Empfangsantenneneinheit, wobei das abgehende HF-Signal durch die mehreren Hindernisse gestreut wird, um das eingehende HF-Signal zu erzeugen;

eine Mischstufe, die an den Empfänger und an den Sender gekoppelt und ausgelegt ist zum Demodulieren des ankommenden HF-Signals, um ein demoduliertes Signal zu erzeugen;

einen Analog-Digital-Wandler (ADW), der an die Mischstufe gekoppelt und ausgelegt ist zum Erzeugen eines digitalen Signals als Reaktion auf das von der Mischstufe empfangenen demodulierten Signals;

ein FFT- (Fast Fourier Transform-) Modul, das an den ADW gekoppelt und ausgelegt ist zum Transformieren des digitalen Signals von einem Zeitbereich zu einem Frequenzbereich; und

die Signalverarbeitungseinheit, die an das FFT-Modul gekoppelt und ausgelegt ist zum:

Verarbeiten des digitalen Signals.

10. Radarvorrichtung nach Anspruch 9,

wobei das abgehende HF-Signal mehrere Rahmen des durch den Sender erzeugten HF-Signals enthält, und das ankommende HF-Signal mehrere Rahmen des von den mehreren Hindernissen empfangenen Signals enthält.

11. Radarvorrichtung nach Anspruch 10, wobei:

die mehreren Rahmen des von den mehreren Hindernissen an dem linearen Array von Antennen empfangenen Signals zum Schätzen der Azimuthfrequenz und der komplexen Amplitude, mit jedem Hindernis assoziiert, verwendet werden; und

die mehreren Rahmen des von den mehreren Hindernissen an der zusätzlichen Antenne empfangenen Signals zum Schätzen des mit jedem Hindernis assoziierten komplexen Phasors verwendet werden;

und/oder wobei die Sendeantenneneinheit mehrere Sendeantennen enthält, die zusammen arbeiten, um eine Position jedes Hindernisses in einer ersten Entfernung zu schätzen, und die in einer Sequenz arbeiten, um eine Position jedes Hindernisses in einer zweiten Entfernung zu schätzen, wobei die erste Entfernung größer ist als die zweite Entfernung.

**Revendications**

1. Appareil radar pour estimer la position d'une pluralité d'obstacles, l'appareil radar comprenant :
une unité d'antenne de réception, comprenant :

   un réseau linéaire d'antennes ; et
   une antenne supplémentaire à un décalage prédéfini d'au moins une antenne dans le réseau linéaire d'antennes ;
   et
   une unité de traitement de signal configurée pour :

      estimer une fréquence d'azimut associée à chacun des obstacles à partir d'un signal reçu de la pluralité d'obstacles au niveau du réseau linéaire d'antennes ;
      estimer une amplitude complexe associée à chaque obstacle à partir de la fréquence d'azimut estimée associée à la pluralité d'obstacles et à partir du signal reçu de la pluralité d'obstacles au niveau du réseau linéaire d'antennes ;
      estimer un phaseur complexe associé à chaque obstacle à partir de l'amplitude complexe estimée associée à la pluralité d'obstacles, et à partir d'un signal reçu de la pluralité d'obstacles au niveau de l'antenne supplémentaire ; et
      estimer un angle d'azimut et un angle d'élévation associés à chaque obstacle à partir du phaseur complexe estimé associé à chaque obstacle et à partir de la fréquence d'azimut estimée associée à chaque obstacle.

2. Appareil radar selon la revendication 1, dans lequel une pluralité de trames du signal reçu de la pluralité d'obstacles au niveau du réseau linéaire d'antennes est utilisée pour estimer la fréquence d'azimut ; et où l'amplitude complexe est estimée pour chaque trame de la pluralité de trames ; et/ou où une pluralité de trames du signal reçu de la pluralité d'obstacles au niveau de l'antenne supplémentaire est utilisée pour estimer le phaseur complexe associé à chaque obstacle.

3. Appareil radar selon la revendication 1, dans lequel l'estimation de l'amplitude complexe et/ou du phaseur complexe associé à chaque obstacle est une estimation parmi une estimation par les moindres carrés et une estimation par les moindres carrés pondérés.

4. Appareil radar selon la revendication 1, comprenant en outre : une unité d'antenne d'émission comprenant une pluralité d'antennes d'émission qui fonctionnent ensemble pour estimer la position de chaque obstacle dans une première plage et qui fonctionnent selon une séquence pour estimer la position de chaque obstacle dans une seconde plage, où la première plage est plus étendue que la seconde plage.

5. Véhicule comprenant l'appareil radar selon la revendication 1.

6. Procédé d'estimation de la position d'une pluralité d'obstacles en utilisant un appareil radar comprenant une unité d'antenne de réception, qui comprend un réseau linéaire d'antennes et une antenne supplémentaire à un décalage prédéfini d'au moins une antenne dans le réseau linéaire d'antennes, le procédé comprenant les étapes suivantes :

   estimer une fréquence d'azimut associée à chacun des obstacles à partir d'un signal reçu de la pluralité d'obstacles au niveau du réseau linéaire d'antennes ;
   estimer une amplitude complexe associée à chaque obstacle à partir de la fréquence d'azimut estimée associée à la pluralité d'obstacles et à partir du signal reçu de la pluralité d'obstacles au niveau du réseau linéaire d'antennes ;
   estimer un phaseur complexe associé à chaque obstacle à partir de l'amplitude complexe estimée associée à la pluralité d'obstacles et d'un signal reçu de la pluralité d'obstacles au niveau de l'antenne supplémentaire ; et
   estimer un angle d'azimut et un angle d'élévation associés à chaque obstacle à partir du phaseur complexe estimé associé à chaque obstacle et à partir de la fréquence d'azimut estimée associée à chaque obstacle.

7. Procédé selon la revendication 6, comprenant en outre l'étape suivante :
estimer la fréquence d'azimut et l'amplitude complexe associées à chaque obstacle à partir d'une pluralité de trames du signal reçu de la pluralité d'obstacles au niveau du réseau linéaire d'antennes et/ou comprenant en outre l'étape suivante :

estimer le phaseur complexe associé à chaque obstacle à partir d'une pluralité de trames du signal reçu de la pluralité d'obstacles au niveau de l'antenne supplémentaire.

**8.** Procédé selon la revendication 6, dans lequel :

l'estimation de l'amplitude complexe associée à chaque obstacle est une estimation parmi une estimation par les moindres carrés et une estimation par les moindres carrés pondérés ; et
l'estimation du phaseur complexe associé à chaque obstacle est une estimation parmi une estimation par les moindres carrés et une estimation par les moindres carrés pondérés ;
et/ou dans lequel le dispositif radar comprend une unité d'antenne d'émission, qui comprend une pluralité d'antennes d'émission qui fonctionnent ensemble pour estimer la position de chaque obstacle dans une première plage et qui fonctionnent selon une séquence pour estimer la position de chaque obstacle dans une seconde plage, où la première plage est plus étendue que la seconde plage.

**9.** Appareil radar selon la revendication 1, comprenant en outre :

une unité d'antenne d'émission ;
un émetteur couplé à l'unité d'antenne d'émission et configuré pour générer un signal radiofréquence, RF, sortant ; et
un récepteur couplé à l'unité d'antenne de réception et configuré pour recevoir un signal RF entrant depuis l'unité d'antenne de réception, où le signal RF sortant est dispersé par la pluralité d'obstacles pour générer le signal RF entrant ;
un mélangeur couplé au récepteur et à l'émetteur et configuré pour démoduler le signal RF entrant afin de générer un signal démodulé ;
un convertisseur analogique-numérique, ADC, couplé au mélangeur et configuré pour générer un signal numérique en réponse au signal démodulé reçu du mélangeur ;
un module de transformée de Fourier rapide, FFT, couplé à l'ADC, et configuré pour transformer le signal numérique d'un signal de domaine temporel en un signal de domaine fréquentiel ; et
l'unité de traitement du signal étant couplée au module FFT et configurée pour :
traiter le signal numérique.

**10.** Appareil radar selon la revendication 9,
dans lequel le signal RF sortant comprend une pluralité de trames du signal RF généré par l'émetteur, et le signal RF entrant comprend une pluralité de trames du signal reçu de la pluralité d'obstacles.

**11.** Appareil radar selon la revendication 10, dans lequel :

la pluralité de trames du signal reçu de la pluralité d'obstacles au niveau du réseau linéaire d'antennes est utilisée pour estimer la fréquence d'azimut et l'amplitude complexe associées à chaque obstacle ; et
la pluralité de trames du signal reçu de la pluralité d'obstacles au niveau de l'antenne supplémentaire est utilisée pour estimer le phaseur complexe associé à chaque obstacle ;
et/ou dans lequel l'unité d'antenne d'émission comprend une pluralité d'antennes d'émission qui fonctionnent ensemble pour estimer la position de chaque obstacle dans une première plage et qui fonctionnent selon une séquence pour estimer la position de chaque obstacle dans une seconde plage, où la première plage est plus étendue que la seconde plage.

FIG. 1

EP 3 060 940 B1

FIG. 2(a)

FIG. 2(c)-1

FIG. 2(c)-2

FIG. 2(c)-3

FIG. 2(b)

315

CONTROL
MODULE

300

305        310

⊽        TRANSMITTER        MIXER        ADC        FFT
MODULE        SIGNAL
PROCESSING
UNIT

⊽        RECEIVER

320        325        330        335        340        345

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2113788 A